Europäisches Patentamt

European Patent Office

Office européen des brevets

(19)

(11) Publication number: **0 195 069**
**B1**

# EUROPEAN PATENT SPECIFICATION

(12)

(45) Date of publication of patent specification: **06.09.89**

(21) Application number: **85904911.6**

(22) Date of filing: **17.09.85**

(86) International application number:
**PCT/US85/01782**

(87) International publication number:
**WO 86/01684 27.03.86 Gazette 86/07**

(51) Int. Cl.⁴: **A 21 D 13/00, A 21 D 13/08**

(54) FILLER CREAM.

(30) Priority: **17.09.84 US 651088**

(43) Date of publication of application:
**24.09.86 Bulletin 86/39**

(45) Publication of the grant of the patent:
**06.09.89 Bulletin 89/36**

(84) Designated Contracting States:
**AT BE CH DE FR GB IT LI LU NL SE**

(56) References cited:
**FR-A-2 403 746**
**GB-A-1 013 372**
**GB-A-1 080 998**

(73) Proprietor: **NABISCO BRANDS, Inc.**
**Nabisco Brands Plaza**
**Parsippany New Jersey 07054 (US)**
(73) Proprietor: **DURKEE INDUSTRIAL FOODS CORP.**
**(a Delaware Corporation)**
**925 Euclid Avenue Suite 800**
**Cleveland Ohio 44115 (US)**

(72) Inventor: **PORCELLO, Sam, Joseph**
**111 Palmetto Drive**
**Toms River, NJ 08753 (US)**
Inventor: **MANNS, James, Michael**
**Star Route Box 46-3**
**Glenwood, NJ 07418 (US)**

(74) Representative: **Bonnetat, Christian et al**
**Cabinet PROPI Conseils 23 rue de Léningrad**
**F-75008 Paris (FR)**

Courier Press, Leamington Spa, England.

## Description

This invention relates to filler creams for baked products, methods for making the filler creams, and products containing the filler creams.

Filler creams have been used in baked goods and other foods in a variety of ways. The common use is to insert a filler cream into a baked pastry by injection. Another common method is to use a filler cream as a laminate or "sandwich" material between two cookie base cakes.

Filler cream compositions are generally comprised of sucrose or sucrose in combination with other sugars, flavorings, and oils or fats. Variations of the ingredients of a filler cream composition can lead to significantly different properties in a filler cream. Sugar combinations can cause a filler cream to be too sweet for eating in large quantities or, if articificial sweeteners are used, the filler cream can be too bitter for consumer acceptance.

The oil or fat used in filler creams can be a single oil or fat or a mixture of oils or fats. For purposes of this invention any oil or fat or mixture thereof used in a filler composition is identified by the term "oleaginous composition". Desirable oleaginous compositions used in filler cream for sandwich cookies are firm, but soft or "spreadable" at ordinary storage temperatures. Desirable oleaginous compositions must have good whipping and creaming properties that develop a filler cream with a light, consistent texture during whipping and aeration process steps. Also, desirable oleaginous compositions have a palatable flavor with little or no after taste and produce a filler cream that dissolves rapidly at body temperature when consumed. Oleaginous compositions used in commercial filler creams must have good shelf storage properties.

It is desirable for a filler cream to have a short "plastic range" in which there is a high solid fat content at low temperatures and approximately no solid fat content above body temperature. The term, plastic range, refers to the temperature range in which a filler cream fat or oleaginous composition is neither completely solid not completely liquid. In this range the filler cream fat is pliable, but not completely fluid. A typical filler cream is manufactured from a soybean oil based oleaginous composition and sugar.

The whipping or aerating qualitites of an oleaginous composition refer to the ability of that oleaginous composition to hold air incorporated into it. Air is sparged into the oleaginous composition as it is mixed at a temperature of about 35°C (95°F). The air is desirably retained by the filler cream at room temperature for several months. Desirable whipping or aerating qualitities in an oleaginous composition produce a filler cream that is "light" on the palate when consumed. Light characteristics of a filler cream are best understood by comparing a whipped cream product to a solid fat product such as margarine. A solid fat product melts slowly on the tongue and leaves an oleaginous coating. A whipped cream product dissolves rapidly and leaves little or no oily after taste. Aeration also controls firmness of the filler cream. Generally, increasing the aeration of a filler cream increases its softness.

The characteristics of an oleaginous composition can be altered without changing the source of the oils or fats in the composition. This is done by altering the amount of hydrogenation of the oils, the ratio of various oils to one another in the composition, and the amount of fractionation of the oils. Increased hydrogenation or fractionation usually imparts greater plasticity to an oleaginous composition. A reference detailing the properties of various food oils is Weis, *Food Oils and Their uses*, the AVI Publishing Company (2d et. 1983).

Filler cream compositions known in the art of producing cookies are usually made from inexpensive oils or fats such a soybean oil and are processed so as to achieve a stiff filler cream, which can be applied to base cakes of cookies without the use of high temperatures. These filler creams are then quikly solidified in cooling apparatus and remain solid and firm throughout three months or more of storage. Good storage of shelf stability characteristics are frequently achieved in a filler cream at the sacrifice of desirable mouth feel characteristics. As a result traditional filler creams made from inexpensive oils or fats and used in sandwich cookies leave an oily or waxy after taste and remain firm and partially solid at body temperature.

The shelf life of a filler cream can be improved by incorporating antioxidants into the oleaginous composition. Antioxidants prevent the development of undesirable flavors and odors associated with rancidity of fats-or-oils present in the filler cream. A three to nine month shelf life is desirable for commercial filler creams. Desirable shelf life or stability characteristics include resistance to structural, microbial, flavor, and color degradation.

US—A—3,244,536 describes one traditional filler cream used in sandwich cookies and containing two components. The first component is a commercially hydrogenated fat with a high content of $C_{18}$ fatty acids. The second component, which is a vegetable oil containing component, has a high proportion of lauric acid. These two components are blended and subjected to interesterification. Any animal fats or vegetable oils can be used as the first component for this invention. Tallow and lard are preferred for use as the second component. The vegetable oils used for the use component can be coconut oil or palm kernel oil.

US—A—2,359,228 describes a second prior art filler cream achieving good storage properties by incorporating dried starch conversion syrup solids into the cream. The substitution of dextrose by dry corn syrup stabilizes the moisture content within the final cookie product without producing a "gritty" filler cream.

A third prior art filler cream, disclosed in US—A—4,410,552 and used for chocolate candies, has its oleaginous composition altered to improve and enhance "mouth feel". The materials used in this filler cream are a combination of fats, sugars, water, and colloid substances. This combination is mixed and whipped together into a semi-plastic mass. The filler cream that is obtained does not have a texture which is either sticky or fatty-like.

US—A—4,310,557 describes a fourth prior art filler cream containing food emulsifiers. The emulsifiers can produce products that are light in texture.

This invention provides an inexpensive filler cream suitable for use with sandwich cookies and other foods that remains firm during storage has a creamy, non-gritty texture and quick "get away" characteristics when consumed. As used herein "get away" characteristics means the perception of rate of dissolution of the filler cream in the mouth. A filler cream with "quick get away" characteristics is one which is perceived by an expert taste panel as dissolving, melting, changing from solid to liquid, or disappearing quickly or rapidly in the mouth, without a waxy or oily after taste. In the filler creams of the invention, an oleaginous composition which changes from a first texture to a liquid within a narrow temperature range and which is essentially completely liquid at body or mouth temperatures quickens the get away characteristics of the filler cream.

This invention provides a filler cream comprising an oleaginous composition and a sugar mixed into the oleaginous composition. In order to impact quick away properties to the filler cream, the solid fat index of the oleaginous composition and the specific gravity of the filler cream are interrelated in one of the following ways:

a) the oleaginous composition has a solid fat index of from about 15 to about 34 percent solids material at 21.1°C (70°F) and from about 0.7 to about 6 percent solid material at 33.3°C (92°F) and the filler cream has a specific gravity of between about 0.70 and about 0.82; or

b) the oleaginous composition comprises soyabean oil and has a solid fat index of from about 26 to about 33 percent solid material at 21.1°C (70°F) and up to about 5 percent solid material at 33.3°C (92°F), and the filler cream has a specific gravity of between about 0.85 and about 1.20.

The filler creams having a specific gravity of 0.70 to 0.82 are hereinafter referred to as the "low density" filler creams of the invention, while the filler creams comprising soybean oil and having a specific gravity of 0.85 to 1.20 are hereinafter referred to as the "soyabean-based" filler creams of the invention.

It will be noted that GB—A—1,080,998, GB—A—1,013,372 and FR—A—2,403,746 relate to creams and may be considered as defining the general state of the art. However, none of these known creams has a steep decrease to the fat solid index between 20°C and 30°C and cannot therefore have a quick "get away".

This invention also provides a sandwich cookie comprising two cookie base cakes having a layer of a filler cream of the invention sandwiched therebetween.

Finally, this invention provides a process for the preparation of a filler cream of the invention, this process comprising mixing an oleaginous composition and a sugar, the oleaginous composition having a solid fat index of:

(a) from about 15 to about 34 percent solid material at 21.1°C (70°F) and from about 0.7 to about 6 percent solid material at 33.3°C (92°F); or

(b) from about 26 to about 33 percent solid material at 21.1°C (70°F) and up to about 5 percent solid material at 33.3°C (92°F);

the preparation of the filler cream being effected by heating the oleaginous composition, blending the sugar into the oleaginous composition to form a slurry, and aerating and mixing the slurry with simultaneous cooling to a temperature below 23.9°C (75°F) to form a filler cream of the invention.

The filler creams of the invention have enhanced get away properties, that is to say, they have a high solid content at normal storage temperatures but melt rapidly upon contact with the tongue during consumption. The filler cream desirably contains a flavoring material, for example vanilla. The rapid melting of the filler cream allows the sugar and any flavoring ingredients to quickly coat the tongue, giving a rapid flavor sensation.

The filler cream of this invention remains firm at room temperature but has a quick get away property upon consumption. This property causes the consumer to realize a quick burst of sweetness and flavoring when the filler cream melts on the consumer's tongue.

The filler cream of this invention can be prepared by first heating the oleaginous composition to between about 40.6°C (105°F) and about 48.9°C (120°F).

Flavorings and any non-sugar ingredients, as non-fat dry milk powder, are added to the the heated oleaginous composition. Sugar is then added to this mixture. The sugar is not dissolved in the oleaginous composition, but is added with mixing to form a suspension.

The mixture of oil, sugar, and miscellaneous ingredients is aerated and mixed simultaneously. As the air sparging or aeration step begins, the temperature of the mixture is reduced to below about 25.6°C (78°F). The reduction in temperature of the mixture occurs within approximately 5 minutes. Particularly with the soyabean based filler creams of the invention, the mixing is best performed in a mixing machine having three or more distinct temperature reduction zones. Such mixing machines, by reducing the temperature of the mixture or filler cream composition, produce a high concentration of beta-prime fat crystals in the filler cream. Beta-prime fat crystals impart stable aerating properties to a filler cream.

The result of aeration, whipping, and cooling is the formation of the filler cream. The filler cream can then be transferred to a "sandwich unit" which applies the filler cream to base cakes or cookie pieces. Because of the melting properties of the filler cream, it is desirable to keep the sandwich unit cooled below about 21.1°C (70°F) during operation. The base cakes or cookie pieces should also be cooled upon their exit from an oven to below about 21.1°C (70°F). It is also desirable to package the final product containing filler cream in vapor proof packaging to prevent excessive moisture from being absorbed into the base cake.

The step of air sparging, which includes mixing and cooling the filler cream composition, is critical to producing a filler cream with the desired properties of this invention. The addition of sugar and the other ingredients to the heated oleaginous composition lowers the temperature of the "slurry" or filler cream composition to between 35°C (95°F) and 37.8°C (100°F). At this temperature the filler cream composition has a specific gravity of between approximately 1.18 to approximately 1.22 in the case of the low density filler creams, or approximately 1.20 to approximately 1.25 in the case of the soybean-based filler creams. Upon air sparging and rapid mixing of the slurry a filler cream specific gravity of between about 0.70 to about 0.82, in the case of the low density filler creams, or between about 0.85 to about 1.20 for the soyabean-based filler creams, is obtained. The most desirable specific gravity for the low density filler creams is between 0.73 and 0.77, while the preferred specific gravity for the soya-bean-based filler creams is from 0.85 to 0.95. A high concentration of air in the filler cream gives the filler cream a light "feel" or sensation on the tongue during consumption. Decreasing the specific gravity of the filler cream increases its softness.

The oleaginous composition may be used in the filler creams of the invention in combination with an emulsifier. For example, polyglycerol esters in combination with soybean oil and palm kernel oil are useful in producing a smooth filler cream with a quick get away. Generally, the emulsifiers assist in the incorporation of sugar and other ingredients into an oleaginous composition.

The filler cream of the invention will typically contain from about 30 to about 45 percent by weight of the oleaginous composition, this percentage being based on the total weight of the oleaginous composition and the sugar. The specific low density filler cream described in Example VI contains substantially 40 percent oleaginous composition and 60 percent sugar on this basis. However, filler creams containing less than about 40 percent, by weight oleaginous composition and more than about 60 percent by weight sugar, based upon the total weight of the sugar and oleaginous composition are preferred because of: 1) the relatively higher cost of the oleaginous composition and 2) the risk of melting of the oleaginous composition during adverse summertime storage and transportation temperatures. If any of the oleaginous composition melts, there would be more sugar available to be coated to retain the oil and to retain the structure of the filler cream and baked good.

However, as the weight percent of the oleaginous composition decreases, the filler is generally perceived as less creamier and more gritty as the particle size of the sugar increases. To provide a creamy, non-gritty texture, at low weight percentages of oleaginous compositions, the sugar may be preground or the mixture of sugar and oleaginous material may be ground. In either case, it is desirable to obtain a particle size for the sugar of less than 40 microns. These compositions may suitably comprise from about 32% to about 38% by weight of the oleaginous compositions and from about 62% to about 68% by weight of the ground sugar, based upon the total weight of the ground sugar and oleaginous composition. The percentages of sugar refer to sucrose alone or to mixtures of sucrose with other sugars such as fructose, dextrose, or lactose. Although costs would be higher, 40% by weight ov more of the oleaginous composition may be used with coarser sugars during winter months to obtain filler creams having a creamy texture and quick get away. More than about 45 percent oleaginous composition in the filler cream generally causes the cream filler to be too thick or "heavy" when consumed.

The filler creams of this invention may include a stiffener ingredient. A desirable stiffener is non-fat milk powder which can be added in an amount between about 3 and about 10 percent based upon the weight of the filler cream. Excessive amounts of non-fat milk powder cause the final texture of the filler cream to have a "gritty' feel on the tongue of a consumer. The absence of a stiffener does not adversely affect the quick get away properties of the filler cream. A filler cream made without a stiffener has the tendency to melt or collapse at near room temperatures after prolonged periods of storage at adverse summertime temperatures or exposure to adverse transportation conditions. Lecithin can also be used as a processing aid to improve flow properties of the slurry. Dextrose and/or edible fused silica can be used in amounts up to about 10 percent by weight as a stabilizer for the filler cream, based upon the weight of the filler cream. In amounts above about 5 percent, dextrose tends to impart a cooling sensation to the filler cream during consumption.

Various flavorings can be added to the filler cream. Suitable amounts range up to about 1 part by weight of flavoring, based upon the weight of the filler cream. Typical flavorings which can be used are vanilla, chocolate, coffee, and peppermint. Numerous suitable flavorings and extracts are commercially avaialable. Vanilla is the preferred flavoring.

Sugar or sucrose is the primary ingredient of a filler cream made according to this invention. The sugar is sifted into the oleaginous composition before air sparging, mixing, and cooling. Commercially available sugars, such as fine granulated table sugar, or 4X, 6X, 10X, or 12X sugars or mixtures of sugars may be used in the present invention. It is recommended that, in the filler cream, the sugar be at least as fine as 10X in the case of the low-density filler creams and at least as fine as 6X in the case of the soyabean-based filler creams. The resultant degree of fineness of sugar in the filler cream may be achieved by using an appropriately fine sugar for the preparation of the filler cream. However, grinding of coarse sugars to a finer particle size is more economical than the use of 10X or finer sugars. The finer or powdered sugars tend to densify and agglomerate upon storage prior to incorporation into the filler. Grinding to a particle size of less than 40 microns, results in non-gritty and significantly smoother filler cream textures, particularly when the filler cream contains from about 33% to about 38% of the oleaginous composition, based upon the total weight of the oleaginous composition and sugar.

The base cakes or cookie pieces used with a filler cream, according to this invention, need not be made from any special formulas. A soft base cake breaks apart more easily when eaten by a consumer. A hard base cake tends to resist breakage and can cause a filler cream to be squeezed out of the sides of a sandwich cookie. The firmness of the filler creams made with soybean oil according to this invention is sufficient to resist being squeezed out from between the base cakes when a cookie is eaten. With the low density filler creams of the invention, it is desirable to use a softer base cake than with most prior art filler creams.

With some base cakes an oil migration from the filler cream into the cake can occur during prolonged storage. This problem can be reduced or eliminated by altering the base cake formula to include less shortening or oil. After manufacturing the cookies the oil from the filler cream migrates into the base cakes to produce an acceptable oil concentration in the base cakes. This migration occurs over a period of a few days or weeks. Alternatively, a film coating or wax coating can be applied to the layer of a base cake that receives the filler cream. These coatings act as a barrier to the oil migragint from the filler cream.

As will be apparent from the foregoing description, most of the preferred ingredients and preparative techniques used to prepare the filler creams of the invention are the same or similar for both the low density and soyabean-based filler creams. However, there are certain respects in which the low density filler creams differ significantly from the soyabean-based filler creams as regards the oleaginous compositions used in the two types of filler creams.

In both types of filler creams, the solid fat index of the oleaginous composition used is critical in achieving the desired properties of the filler creams. The solid fat index is most critical between storage or room temperature and body temperature. However, the solid fat indices required to provide the desired quick get away properties differ between the low density and soybean-based filler creams. Accordingly, the oleaginous compositions suitable for use in the two types of filler creams are discussed in the two separate sections below.

Low density filler creams

The oleaginous composition for use in the low density filler creams of this invention desirably has a solid fat index according to the following table.

TABLE I
Solid fat index

| °F | °C | % solid range |
|---|---|---|
| 50 | 10 | 31.0 to 51.0 |
| 70 | 21.1 | 15.0 to 34.0 |
| 80 | 26.7 | 3.0 to 23.0 |
| 92 | 33.3 | 0.7 to 6.0 |
| 104 | 40 | 0.0 to 1.0 |

Oleaginous compositions having solid fat indices within the above ranges produce filler creams with the desired quick get away property.

Preferred filler creams are achieved using oleaginous compositions with solid fat indices in the following ranges.

TABLE II
Solid fat index

| °F | °C | % Solid range |
|---|---|---|
| 50 | 10 | 32.0 to 42.0 |
| 70 | 21.1 | 15.0 to 20.0 |
| 80 | 26.7 | 3.0 to 12.0 |
| 92 | 33.3 | 0.7 to 4.0 |
| 104 | 40 | 0.0 to 0.0 |

Oleaginous compositions containing mixtures having a solid fat index according to the above ranges can be obtained from numerous sources and can consist of numerous mixtures of oils, both fractionated and unfractionated, and having various degrees of hydrogenation.

The oleaginous compositions identified above were formulated specifically for use with this invention and were derived to meet the parameters established for use with this invention. A particularly desirable oleaginous composition for use in the low density filler creams of this invention is a combination of three oils each of which is partially hydrogenated. These oils are:

TABLE III
Oleaginous composition

| Oil | % by volume |
|---|---|
| Palm kernel | 33—37 |
| Cotton seed | 4—6 |
| Soybean | 63—57 |

Desirably, the palm kernel and the soybean oils are fractionated. Other suitable oleaginous compositions can contain between 25 and 42 percent of palm kernel oil, between 2 and 12 percent of cotton seed oil, and between 73 and 46 percent of soybean oil, all percentages being by volume, with the total equalling 100%.

The oleaginous composition of Table III has the following solid fat indices.

TABLE IV
Solid fat index

| °F | °C | % Solid |
|---|---|---|
| 50 | 10 | 39 |
| 70 | 21.1 | 17 |
| 80 | 26.7 | 7 |
| 92 | 33.3 | 1 |
| 104 | 40 | 0 |

Other filler creams of this invention can include oil compositions similar to those listed in Table III, but containing palm oil or coconut oil. The inclusion of these or other oils can affect the taste of the filler cream without greatly varying the quick get away properties.

Soyabean-based filler creams

Preferred oleaginous compositions for use in the soyabean-based filler creams of this invention have a solid fat index within the ranges presented in Table V.

TABLE V
Solid fat index

| °F | °C | % Solid range minimum | | maximum |
|---|---|---|---|---|
| 50 | 10 | 46 | to | 52 |
| 70 | 21.1 | 26 | to | 33 |
| 80 | 26.7 | 9 | to | 15 |
| 92 | 33.3 | 0.0 | to | 5.0 |
| 104 | 40 | 0.0 | to | 0.0 |

Oleaginous compositions having a solid fat index within the above ranges produce a soyabean-based filler cream with improved quick get away properties when compared to conventional soybean oil containing filler creams. Filler creams according to this invention also remain firm at storage temperatures.

Oleaginous compositions containing mixtures of soybean oil and one or more other oils and having a solid fat index according to the above ranges can be obtained from numerous sources. Suitable oleaginous compositions can have numerous mixtures of either fractionated or unfractionated oils and oils having various degrees of hydrogenation.

The preferred oleaginous composition is a combination of two oils each of which is partially hydrogenated, fractionated, and interesterified. These oils are:

TABLE VI
Preferred oleaginous composition

| Oil | % by volume Minimum | | Maximum |
|---|---|---|---|
| Palm kernel | 45 | to | 55 |
| Soybean | 55 | to | 45 |

The decreased concentration of soybean oil in this invention when compared to conventional filler cream, decreases the "waxy" mouth feel experienced with conventional soybean oil containing filler creams.

The oleaginous compositions may also contain oils in similar ratios to that listed in Table II, but substituting palm oil, cotton seed oil, or coconut oil or mixtures thereof in whole or in part for the palm kernel oil or soybean oil. Complete replacement of the soybean oil is not preferred because of the higher costs of other oils. The inclusion of palm oil, cotton seed oil, coconut oil, or other edible oils can affect the organoleptic qualities of the filler cream without greatly varying the quick get away properties.

The following Examples further illustrate the present invention. All percentages and parts are by weight.

## Example I

A filler cream may be prepared from the following ingredients and their relative amounts.

| Ingredients | Quantity Parts by weight |
|---|---|
| Sugar 6× | 137.0 |
| Oleaginous composition | 100.0 |
| Vanilla | 0.056 |

The oleaginous composition may be a mixture of 50% by weight soybean oil and 50% by weight palm kernel oil.

The composition may have a solid fat index (SFI) of 49% at 10°C (50°F), 29% at 21.1°C (70°F), 12% at 26.7°C (80°F), 2.5% at 26.7°C (92°F) and 0% solids at 40°C (104°F). The oleaginous composition may then be heated to 43.3°C (110°F) with mixing. Vanilla flavor can be added to the heated oils. The 6× powdered sugar may be sifted and added slowly to the mixture with continued mixing. The resulting slurry may have a temperature of between about 35°C (95°F) and about 37.7°C (100°F) and a specific gravity of about 1.20.

Upon suspension of the sugar in the oleaginous composition, air sparging begins in conjunction with rapid, simultaneous mixing and cooling of the composition to below 23.8°C (75°F). The air sparging and mixing continue until the filler cream obtains a specific gravity of 0.90. The aerating, mixing, and cooling may be performed in a Votator icing mixing machine made by Anco Votator Division, Cherry Berrell Corporation, Louisville, Kentucky. The filler may then be transported to a temperature controlled sandwich unit that applies the filler cream to base cakes on a commercial sandwich cookie manufacturing line.

## Example II

The ingredients and amounts which may be used to prepare a filler cream can be:

| Ingredients | Quantity Parts by weight |
|---|---|
| Sugar 6× | 127.0 |
| Oleaginous compositions of Example I | 100.0 |
| Non-fat dry milk | 10.0 |
| Vanilla | 0.056 |

The filler cream may be prepared as in Example I except the non-fat dry milk is added with the vanilla to the heated oils.

## Example III

The ingredients and their relative amounts which may be used to prepare a filler cream can be:

| Ingredients | Quantity Parts by weight |
|---|---|
| Sugar 6× | 117.0 |
| Soybean oil | 45.0 |
| Palm kernel oil | 55.0 |
| Dextrose | 20.0 |
| Vanilla | 0.056 |

The soybean oil and the palm kernel oil may be formulated to provide an oleaginous composition having an SFI as in Example I. The filler cream may be prepared as in Example I except the dextrose is added with the vanilla to the hot oils.

## Example IV

A filler cream may be prepared with a more finely granulatsd sugar to obtain a firmer but creamier or less gritty mouthfeel than the filler of Example I. The procedure used may be the same as that used in Example I. The ingredients and their relative amounts may be:

| Ingredients | Quantity Parts by weight |
|---|---|
| Sugar 10× | 137.0 |
| Soybean oil | 50.0 |
| Palm kernel oil | 25.0 |
| Coconut oil | 25.0 |

The soybean oil, palm kernel oil, and coconut oil may be formulated to provide an oleaginous composition having an SFI as in Example I.

## Example V

A filler cream may be prepared using the procedure of Example I except the ingredients and their relative amounts may be:

| Ingredients | Parts by weight |
|---|---|
| Preground sugar (less than 40 microns) | 66 |
| Oleaginous composition of Example I | 34 |
| Vanilla | 0.02 |

The preground sugar may be prepared by grinding a commercially available fine granulated table sugar.

## Example VI

A low density filler cream of the invention may, be prepared from the following ingredients:

| Ingredients | Parts by weight |
|---|---|
| Powdered sugar 10× | 137.44 |
| Filler fat of tables III and IV | 100.0 |
| Non fat dry milk | 12.5 |
| Natural vanilla flavor | 0.056 |

The filler fat is heated to 43.3°C (110°F) with mixing and the non-fat dry milk powder and vanilla flavor are added. The 10× powdered sugar is sifted and added slowly with continued mixing. The resulting slurry has a temperature of between about 35°C (95°F) and 37.8°C (100°F) and a specific gravity of 1.20.

Upon suspension of the sugar in the oleaginous composition, air sparging begins in conjunction with rapid mixing and cooling of the composition to 21.1°C (70°F). The air sparging and mixing continue until a filler cream having a specific gravity of 0.75 is obtained. In this example the aerating, mixing, and cooling is done in a turbine type mixing head machine with a series of pins on a rotor and a stator. The rotor turns at high speed. An example of such a machine is a Mini-Mono-domix machine supplied by Mondomix, Reeweg 13, P.O. Box. 98, 1394 ZH Nederhorst, Den Berg, Netherlands. The cream filler is transported to a temperature controlled sandwich unit that applies the filler cream to the base cakes.

**Claims**

1. A filler cream comprising an oleaginous composition and a sugar mixed into the oleaginous composition, characterized in that, to impart quick get away properties to the filler cream, the solid fat index of the oleaginous composition and the specific gravity of the filler cream are interrelated in one of the following ways:

(a) the oleaginous composition has a solid fat index of from about 15 to about 34 percent solid material at 21.1°C (70°F) and from about 0.7 to about 6 percent solid material at 33.3°C (92°F), and the filler cream has a specific gravity of between about 0.70 and about 0.82; or

(b) the oleaginous composition comprises soybean oil and has a solid fat index of from about 26 to about 33 percent solid material at 21.1°C (70°F) and up to about 5 percent solid material at 33.3°C (92°F), and the filler cream has a specific gravity of between about 0.85 and 1.20.

2. A filler cream according to claim 1 characterized in that it has a specific gravity of between about 0.73 and about 0.77.

3. A filler cream according to either of the preceding claims having a specific gravity of between about 0.70 and about 0.82 characterized in that the solid fat index of the oleaginous composition is substantially:

39 percent solid material at 10°C (50°F);

17 percent solid material at 21.1°C (70°F);

7 percent solid material at 26.7°C (80°F);

1 percent solid material at 33.3°C (92°F);

0 percent solid material at 40°C (104°F).

4. A filler cream according to any one of the preceding claims having a specific gravity of between about 0.70 and about 0.82 characterized in that the oleaginous composition comprises from 36 to 45 percent by weight of the combined weight of the oleaginous composition and the sugar.

5. A filler cream accoding to any one of the preceding claims having a specific gravity of between about 0.70 and about 0.82 characterized in that the oleaginous composition comprises a plurality of oils.

6. A filler cream according to claim 5 characterized in that the oleaginous composition comprises three oils.

7. A filler cream according to claim 6 characterized in that the three oils are palm kernel oil, cotton seed oil and soybean oil.

8. A filler cream according to any one of the preceding claims having a specific gravity of between about 0.70 and about 0.82 characterized in that the sugar comprises substantially 60 percent by weight of the combined weight of the oleaginous composition and the sugar.

9. A filler cream according to any one of the preceding claims having a specific gravity of between about 0.70 and about 0.82 characterized in that the sugar is a granulation at least as fine as 6× sugar.

10. A filler cream according to claim 1 having a specific gravity of between about 0.85 and 1.20 characterized in that the solid fat index of the oleaginous composition is:

about 46 to about 52 percent solid at 10°C (50°F);

about 26 to about 33 percent solid at 21.1°C (70°F);

about 9 to about 15 percent solid at 26.7°C (80°F);

up to 5 percent solid at 33,3°C (92°F); and 0 percent solid at 40°C (104°F).

11. A filler cream according to claim 1 or 10 characterized in that it has a specific gravity of between about 0.85 und 0.95.

12. A filler cream according to any one of claims 1, 10 and 11 having a specific gravity of between about 0.85 and about 1.20 characterized in that the soybean oil comprises from 45 to 55 percent by weight of the oleaginous composition.

13. A filler cream according to any one of claims 1 and 10 to 12 having a specific gravity of between about 0.85 and about 1.20 characterized in that a palm kernel oil comprises from 55 to 45 percent by weight of the oleaginous composition.

14. A filler cream according to any one of claims 1 and 10 to 13 having a specific gravity of between about 0.85 and about 1.20 characterized in that the oleaginous composition comprises about 32 to about 38 percent by weight of the total weight of the sugar and oleaginous composition.

15. A filler cream according to any one of the preceding claims characterized in that the sugar has a particle size of less than about 40 microns.

16. A sandwich cookie comprising two cookie base cakes having a layer of a filler cream sandwiched therebetween characterized in that the filler cream is a filler cream according to any one of the preceding claims.

17. A process for the preparation of a filler cream according to any one of claims 1 to 15, comprising mixing an oleaginous composition and a sugar, the process being characterized in that the oleaginous composition has a solid fat index of:

(a) from about 15 to about 34 percent solid material at 21.1°C (70°F) and from about 0.7 to about 6 percent solid material at 33.3°C (92°F); or

(b) from about 26 to about 33 percent solid material at 21.1°C (70°F) and up to about 5 percent solid material at 33.3°C (92°F), the composition (b) containing soybean oil,

and in that the oleaginous composition is heated, the sugar is blended into the oleaginous composition to form a slurry, and the slurry is aerated and mixed with simultaneous cooling to a temperature below 23.9°C (75°F)

18. A process according to claim 17 characterized in that, in the filler cream produced, the sugar has a particle size of less than about 40 microns.

19. A process according to claim 18 characterized in that the slurry is subjected to grinding to reduce the particle size of the sugar to less than 40 microns.

## Patentansprüche

1. Füllcreme, bestehend aus einem ölhaltigen Gemisch und dem ölhaltigen Gemisch zugesetztem Zucker, dadurch gekennzeichnet, daß, um der Füllcreme die Eigenschaft des schnellen Zergehens zu verleihen, der Kennwert für das feste Fett des ölhaltigen Gemisches und das spezifische Gewicht der Füllcreme bezüglich einer der nachstehenden Beziehungen in Wechselwirkung stehen:

(a) das ölhaltige Gemisch hat einen Kennwert für das feste Fett von ca. 15 bis ca. 34 Prozent feste Materie bei 21.1°C (70°F) und von ca. 0,7 bis ca. 6 Prozent feste Materie bei 33,3°C (92°F), und die Füllcreme hat ein spezifisches Gewicht zwischen ca. 0,70 und ca. 0.82; oder

(b) das ölhaltige Gemisch enthält Sojabohenöl und hat einen Kennwert für das feste Fett von ca. 26 bis ca. 33 Prozent feste Materie bei 21.1°C (70°F) und bis zu ca. 5 Prozent feste Materie bei 33,3°C (92°F), und die Füllcreme hat ein spezifisches Gewicht zwischen ca. 0,85 und ca. 1,20.

2. Füllcreme nach Anspruch 1, dadurch gekennzeichnet, daß sie ein spezifisches Gewicht zwischen ca. 0,73 und ca. 0,77 hat.

3. Füllcreme nach den vorhergehenden Ansprüchen mit einem spezifischen Gewicht zwischen ca. 0.70 bis ca. 0.82, dadurch gekennzeichnet, daß der Kennwert für das feste Fett des ölhaltigen Gemisches im wesentlichen beträgt:

39 Prozent feste Materie bei 10°C (50°F);
17 Prozent feste Materie bei 21,1°C (70°F);
7 Prozent feste Materie bei 26,7°C (80°F);
1 Prozent feste Materie bei 33,3°C (92°F);
0 Prozent feste Materie bei 40°C (104°F).

4. Füllcreme nach einem der vorhergehenden Ansprüche mit einem spezifischen Gewicht zwischen ca. 0.70 und ca. 0,82, dadurch gekennzeichnet, daß das ölhaltige Gemisch aus 30 bis 45 Gewichtsprozent des gemeinsamen Gewichtes des ölhaltigen Gemisches und des Zuckers besteht.

5. Füllcreme nach einem der vorhergehenden Ansprüche mit einem spezifischen Gewicht zwischen ca. 0,70 und ca. 0,82, dadurch gekennzeichnet, daß das ölhaltige Gemisch mehrere Ölsorten enthält.

6. Füllcreme nach Anspruch 5, dadurch gekennzeichnet, daß das ölhaltige Gemisch drei Ölsorten enthält.

7. Füllcreme nach Anspruch 6, dadurch gekennzeichnet, daß die drei Ölsorten Palmkernöl, Baumwollsamenöl und Sojabohenöl sind.

8. Füllcreme nach einem der vorhergehenden Ansprüche mit einem spezifischen Gewicht zwischen ca. 0,70 und ca. 0,82 dadurch gekennzeichnet, daß der Zucker im wesentlichen 60 Gewichtsprozent des gemeinsamen Gewichtes des ölhaltigen Gemisches und des Zuckers aufweist.

9. Füllcreme nach einem der vorhergehenden Ansprüche mit einem spezifischen Gewicht zwischen ca. 0,70 und ca. 0,82, dadurch gekennzeichnet, daß der Zucker eine Kirstallbildung wenigstens so fein wie 6X Zucker aufweiset.

10. Füllcreme nach Anspruch 1 mit einem spezifischen Gewicht zwischen ca. 0,85 und ca. 1,20, dadurch gekennzeichnet, daß der Kennwert für das feste Fett des ölhaltigen Gewisches beträgt:

ca. 46 bis ca. 52 Prozent feste Materie bei 10°C (50°F);

ca. 26 bis ca. 33 Prozent feste Materie bei 21.1°C (70°F);

ca. 9 bis ca. 15 Prozent feste Materie bei 26.7°C (80°F);

bis 5 Prozent feste Materie bei 33,3°C (92°F); und

0 Prozent feste Materie bei 40°C (104°F).

11. Füllcreme nach Anspruche 1 oder 10, dadurch gekennzeichnet, daß sie ein spezifisches Gewicht zwischen ca. 0.85 und ca. 0,95 hat.

12. Füllcreme nach einem der Ansprüche 1, 10 und 11 mit einem spezifischen Gewicht zwischen ca. 0.85 und ca. 1,20, dadurch gekennzeichnet, daß das Sojabohnenöl 45 bis 55 Gewichtsprozent des ölhaltigen Gemisches aufweist.

13. Füllcreme nach einem der Ansprüche 1 und 10 bis 12 mit einem spezifischen Gewicht zwischen ca. 0.85 und ca. 1,20, dadurch gekennzeichnet, daß das Palmkernöl 45 bis 55 Gewichtsprozent des ölhaltigen Gemisches aufweist.

14. Füllcreme nach einem der Ansprüche 1 und 10 bis 13 mit einem spezifischen Gewicht zwischen ca. 0.85 und ca. 1,20, dadurch gekennzeichnet, daß das ölhaltige Gemisch ca. 32 bis ca.

38 Gewichtsprozent des Gesamtgewichtes von Zucker und ölhaltigem Gemisch aufweist.

15. Füllcreme nach einem der vorhergehenden Ansprüche, dadurch gekennzeichnet, daß der Zucker eine Partikelgröße von weniger als ca. 40 Mikron aufweist.

16. Sandwichkeks, bestehend aus zwei Basis-Keksstücken mit einer dazwischenliegenden Lage Füllcreme, dadurch gekennzeichnet, daß die Füllcreme eine Füllcreme nach einem der vorhergehenden Ansprüche ist.

17. Verfahren zur Zubereitung einer Füllcreme nach einem der Ansprüche 1 bis 15, welches das Vermischen eines ölhaltigen Gemisches mit Zucker umfaßt, wobei das Verfahren dadurch gekennzeichnet ist, daß das ölhaltige Gemisch einen Kennwert für das feste Fett aufweist.

(a) von ca. 15 bis ca. 34 Prozent feste Materie bei 21,1°C (70°F) und von ca. 0,7 bis ca. 6 Prozent feste Materie bei 33,3°C (92°F); oder

(b) von ca. 26 bis ca. 33 Prozent feste Materie bei 21,1°C (70°F) und biz ca. 5 Prozent feste Materie bei 33,3°C (92°F), wobei das Gemisch (b) Sojabohnenöl enthält,

und dadurch, daß das ölhaltige Gemisch erwärmte wird, der Zucker in das ölhaltige Gemisch eingemischt wird, so daß ein Brei gebildet wird, und der Brei durchlüftet und verrührt wird bei gleichzeitgem Abkühlen auf eine Temperatur unter 23,9°C (75°F).

18. Verfahren nach Anspruch 17, dadurch gekennzeichet, daß in der hergestellten Füllcreme der Zucker eine Partikelgröße aufweist, die kleiner als ca. 40 Mikron ist.

19. Verfahren nach Anspruch 18, dadurch gekennzeichnet, daß der Brei einem Mahlprozeß unterworfen wird, um die Partikelgröße des Zuckers auf weniger als 40 Mikron zu reduzieren.

**Revendications**

1. Crème de garniture comprenant une composition oléagineuse et un sucre mélangé dans la composition oléagineuse,

caractérisé en ce que, afin de fournir des propriétés de saveur rapide à la crème de garniture, l'indice de craisse solide de la composition oléagineuse et la densité de la crème de garniture sont liées dans l'une des façons suivantes:

(a) la composition oléagineuse présente un indice de graisse solide d'environ 15 à environ 34% de matière solide à 21,1°C (70°F) et d'environ 0,7 à environ 6% de matière solide à 33,3°C (92°F), et la crème de garniture a une densité d'entre environ 0,70 et environ 0,82; ou

(b) la composition oléagineuse comprend de l'huile de soja et présente un indce de graisse solide d'environ 26 à environ 33% de matière solide à 21,1°C (70°F) et jusqu'à environ 5% de matière solide à 33,3°C (92°F), et la crème de garniture a une densité d'entre environ 0,85 et 1,20.

2. Crème de garniture selon la revendication 1, caractérisée en ce qu'elle a une densité d'environ 0,73 à environ 0,77.

3. Crème de garniture selon l'une des revendications précédentes, ayant une densité d'environ 0,70 à environ 0,82,

caractérisée en ce que l'indice de graisse solide de la composition oléagineuse est sensiblement de:

39% de matière solide à 10°C (50°F);
17% de matière solide à 21,1°C (70°F);
7% de matière solide à 26,7°C (80°F);
1% de matière solide à 33,3°C (92°F);
0% de matière solide à 40°C (104°F).

4. Crème de garniture selon l'une quelconque des revendications précédentes, ayant une densité d'environ 0,70 à environ 0,82,

caractérisée en ce que la composition oléagineuse comprend de 30 à 45% en poids du poids combiné de la composition oléagineuse et du sucre.

5. Crème de garniture selon l'une quelconque des revendications précédentes, ayant une densité d'environ 0,70 à environ 0,82, caractérisé en ce que la composition oléagineuse comprend une pluralité d'huiles.

6. Crème de garniture selon la revendication 5, caractérisée en ce que la composition oléagineuse comprend trois huiles.

7. Crème de garniture selon la revendication 6, caractérisée en ce que les trois huiles sont de l'huile de coeur de palmier, de l'huile de coton et de l'huile de soja.

8. Crème de garniture selon l'une quelconque des revendications précédentes, ayant une densité d'environ 0,70 à environ 0,82, caractérisée en ce que le sucre comprend sensiblement 60% en poids du poids combiné de la composition oléagineuse et du sucre.

9. Crème de garniture selon l'une quelconque des revendications précédentes, ayant une densité d'environ 0,70 à environ 0,82, caractérisée en ce que le sucre présente une granulation au moins aussi fine que du sucre 6×.

10. Crème de garniture selon la revendication 1, ayant une densité d'environ 0,85 à 1,20, caractérisée en ce que l'indice de graisse solide de la composition oléagineuse est:

environ 46 à environ 52% de solide à 10°C (50°F);

environ 26 à environ 33% de solide à 21,1°C (70°F);

environ 9 à environ 15% de solide à 26,7°C (80°F);

jusqu'à 5% de solide à 33,3°C (92°F); et 0% de solide à 40°C (104°F).

11. Crème de garniture selon la revendication 1 ou 10, caractérisée en ce qu'elle a une densité d'environ 0,85 à 0,95.

12. Crème de garniture selon l'une quelconque des revendications 1, 10 et 11, ayant une densité d'environ 0,85 à environ 1,20, caractérisée en ce que l'huile de soja comprend de 45 à 55% en poids de la composition oléagineuse.

13. Crème de garniture selon l'une quelconque des revendications 1 et 10 à 12, ayant une densité d'environ 0,85 à environ 1,20, caractérisée en ce que l'huile de coeur de palmier comprend de 55 à 45% en poids de la composition oléagineuse.

14. Crème de garniture selon l'une quelconque des revendications 1 et 10 à 13, ayant une densité d'environ 0,85 à environ 1,20, caractérisée en ce que la composition oléagineuse comprend environ 32 à environ 38% en poids du poids total de la composition oléagineuse et du sucre.

15. Crème de garniture selon l'une quelconque des revendications précédentes, caractérisé en ce que le sucre à une granulomètrie inférieure à 40 microns.

16. Galette sandwich comprenant deux gâteux à base de galette ayant une couche d'une crème de garniture entre eux, caractérisée en ce que la crème de garniture est une crème de garniture selon l'une quelconque des revendications précédentes.

17. Procédé pour la préparation d'une crème de garniture selon l'une des revendications 1 à 15, comprenant le mélange d'une composition oléagineuse et d'un sucre, le procédé étant caractérisé en ce que la composition oléagineuse a un indice de graisse solide de:

(a) environ 15 à environ 34% de matière solide à 21,1°C (70°F), et d'environ 0,7 à environ 6% de matière solide à 33,3°C (92°F); ou

(b) environ 26 à environ 33% de matière solide à 21,1°C (70°F) et jusqu'à environ 5% de matière solide à 33,3°C (92°F), la composition (b) contenant de l'huile de soja, et, en ce que la composition oléagineuse est chauffée, le sucre est mélangé dans la composition oléagineuse pour former une bouillie, et la bouillie est aérée et mélangée avec refroidissement simultané à une température au-dessous de 23,9°C (75°F).

18. Procédé selon la revendication 17, caractérisé en ce que, dans la crème de garniture produite, le sucre présente une granulométrie inférieure à environ 40 microns.

19. Procédé selon la revendication 18, caractérisé en ce que le bouillie est soumise à un broyage pour réduire la granulométrie du sucre à moins de 40 microns.